Europäisches Patentamt

European Patent Office

Office européen des brevets

(19)

(11) Veröffentlichungsnummer : **0 416 370 B1**

# (12) EUROPÄISCHE PATENTSCHRIFT

(45) Veröffentlichungstag der Patentschrift :
22.11.95 Patentblatt 95/47

(51) Int. Cl.⁶ : **G06F 11/00, G06F 11/10, G06F 11/16, G01R 31/00**

(21) Anmeldenummer : 90116029.1

(22) Anmeldetag : 22.08.90

(54) Verfahren und Vorrichtung zum Erkennen und Identifizieren von Fehlern an Sensoren.

(30) Priorität : 05.09.89 DE 3929404

(43) Veröffentlichungstag der Anmeldung :
13.03.91 Patentblatt 91/11

(45) Bekanntmachung des Hinweises auf die
Patenterteilung :
22.11.95 Patentblatt 95/47

(84) Benannte Vertragsstaaten :
AT BE CH DE ES FR GB GR IT LI LU NL SE

(56) Entgegenhaltungen :
I.E.E.E. TRANSACTIONS ON INDUSTRY AP-
PLICATIONS vol. 24, no. 5, October 1988,NEW
YORK, USA pages 905 - 912; H. P. POLENTA
ET AL: 'Microcomputer Based FaultDetection
using Redundant Sensors'

(56) Entgegenhaltungen :
AUTOMATISIERUNGSTECHNIK vol. 37, no. 8,
August 1988, MUNICH, GERMANY pages 289-
294; J. PROCK: 'Ein allgemeines Konzept zur
On-line Messfehlererkennung indynamischen
Systemen mittels analytischer Redundanz'
1989 American Control Conference, Pittsburgh, USA, June 21-23, 1989, J. GERTLERET
AL: 'A Parallel Implementation of Model Based On-Line Failure Detection andIsolation',
pages 2727-2731

(73) Patentinhaber : Bodenseewerk Gerätetechnik
GmbH
Alte Nussdorfer Strasse 15
Postfach 1120
D-88662 Überlingen (DE)

(72) Erfinder : Krogmann, Uwe
Zur Äsche 24
D-7770 Überlingen-Nussdorf (DE)

(74) Vertreter : Weisse, Jürgen, Dipl.-Phys. et al
Bökenbusch 41
Postfach 11 03 86
D-42531 Velbert (DE)

## Beschreibung

Die Erfindung betrifft ein Verfahren zum Erkennen und Identifizieren von Fehlern an Sensoren für Zustandsgrößen, die mit von den Sensoren unmittelbar gelieferten Meßgrößen durch eine Meßgleichung

$$\underline{m} = H\underline{x} + \varepsilon$$

verknüpft sind, wobei $\underline{m}$ ein Vektor der Meßgrößen, $\underline{x}$ ein Vektor der Zustandsgrößen und H die Meßmatrix ist und wobei die Ordnung von $\underline{m}$ größer ist als die Ordnung von $\underline{x}$,
mit den Verfahrensschritten

(a) Bestimmung von Validierungsvektoren $\underline{v}_k$ als Spaltenvektoren einer Matrix

$$P = [\underline{v}_1\ \underline{v}_2 ... \underline{v}_n]$$

(b) Bestimmung eines Paritätsvektors $\underline{v}$ als Element eines Paritätsraumes, der das orthogonale Komplement des Signalraumes ist als Linearkombination der Validierungsvektoren mit den zugehörigen Elementen $m_i$ des Meßvektors $\underline{m}$:

$$\underline{v} = \sum_{i=1}^{n} m_i\ \underline{v}_i = \begin{bmatrix} P_1 & P_2 & ... & P_n \end{bmatrix}^T$$

(c) Bildung einer Detektionsfunktion

$$DF = <\underline{v};\ \underline{v}>$$

als skalares Produkt des Paritätsvektors mit sich selbst, und Prüfung, ob diese Detektionsfunktion größer oder kleiner als ein vorgegebener Grenzwert ist, wobei das Überschreiten dieses Grenzwertes das Vorhandensein eines Fehlers signalisiert.

Auf vielen Gebieten der Technik ist es erforderlich, Zustandsgrößen mit hoher Zuverlässigkeit zu messen. Diese Zustandsgrößen bilden die Basis für eine Regelung. Fehler in dieser Regelung können schwerwiegende Folgen haben, beispielsweise zum Absturz eines Flugzeuges führen oder einen Störfall an einem Kernkraftwerk oder einem chemischen Prozeß verursachen.

Um die erforderliche hohe Zuverlässigkeit zu erzielen, ist es bekannt, Sensoren mehrfach redundant vorzusehen.

Dabei liefert der Sensor häufig nicht unmittelbar die zu messende Zustandsgröße : Ein Kreisel liefert u.U. eine Drehgeschwindigkeit um Achsen, die mit den Achsen, um welche die Drehgeschwindigkeit gemessen werden soll, Winkel einschließen. Solche unterschiedlich orientierten Kreisel dienen insbesondere zur Erzeugung redundanter Signale mit einem Minimum an Bauteilen. Die zu messende Zustandsgröße kann eine Geschwindigkeit über Grund sein, die mittels eines Dopplerradars gemessen wird. Dabei ist die Meßgröße eine Frequenzverschiebung. Die Frequenzverschiebung hängt mit der zu messenden Geschwindigkeit über physikalische und geometrische Beziehungen zusammen. Ein Thermoelement liefert als Meßgröße eine Spannung. Die Zustandsgröße "Temperatur" wird daraus mittels eines Eichfaktors gewonnen. In vielen Fällen ergibt sich auch eine Zustandsgröße als Linearkombination verschiedener Meßgrößen. Generalisiert kann man dies durch eine Vektorgleichung in Form der oben angegebenen Meßgleichung mit einer Meßmatrix H beschreiben.

Die Redundanz äußert sich dabei darin, daß die Ordnung des Meßvektors $\underline{m}$ größer ist als die Ordnung des Zustandsvektors $\underline{x}$, d.h. daß mehr Meßgrößen erfaßt werden, als Zustandsgrößen bestimmt werden müßen.

Im allgemeinen werden für die einzelnen Zustandsgrößen jeweils redundante Sensoren vorgesehen, um die erforderliche Zuverlässigkeit zu erzielen. Es ist aber auch schon bekannt, einen Satz von redundant vorgesehenen Kreiseln sowohl für die Flugregelung, also die Stabilisierung des Flugzeugs als auch für die Navigation ausnutzen.

Informationen über Zustandsgrößen sind aber häufig aus grundsätzlich verschiedenen Sensorsystemen verfügbar. So kann eine Geschwindigkeitsinformation beispielsweise aus den Signalen von Beschleunigungsmessern des Flugreglers durch Integration und gleichzeitig etwa aus einem für andere Zwecke vorgesehenen Dopplerradar verfügbar sein. Bei der Redundanz gleichartiger Sensoren soll hier von "similarer" Redundanz gesprochen werden. Eine Redundanz, die dadurch erhalten wird, daß die gleiche Zustandsgröße aus Sensoren unterschiedlicher Funktion gewonnen wird, soll als "dissimilare Redundanz bezeichnet werden. Similare und dissimilare Redundanz kann durch eine Meßgleichung der eingangs angegebenen Art mit einer geeigneten Meßmatrix **H** mathematisch beschrieben werden. Durch eine solche Betrachtung, welche alle mit den vorhandenen Sensoren gemessenen Meßgrößen über eine Meßmatrix mit allen gesuchten Zustandsgrößen in Beziehung gesetzt wird, ergibt sich häufig ein wesentlich höherer Redundanzgrad, als wenn man lediglich auf die körperliche "similare" Redundanz gleichartiger Sensoren abstellt.

Die bei Sensoren auftretenden Fehler können verschiedener Natur sein. Die Fehler können einfach in ei-

2

nem Ausfall eines Sensors bestehen. Es kann sich aber auch um eine Verschlechterung des Signals handeln, die schließlich dazu führt, daß das Signal nicht mehr verwendbar ist. Man spricht voon "Hard Failure", "Midvalue Failure" oder "Soft Failure".

Die Erfindung betrifft ein Verfahren, um bei einer solchen Anordnung von similar oder dissimilar redundant vorgesehenen Sensoren Fehler zu erkennen.

Die DE-A1-36 34 023 und die EP-A2-0 263 777 zeigen ein integriertes, redundantes Referenzsystem für die Flugregelung und zur Erzeugung von Kurs- und Lageinformationen. Eine Mehrzahl von zweiachsigen, elektrisch gefesselten, dynamisch abgestimmten Kreiseln sind flugzeugfest so angeordnet, daß sie Winkelgeschwindigkeitsinformationen redundant liefern. Eine Mehrzahl von Beschleunigungsmessern liefert entsprechend redundante Beschleunigungsinformation. Erste Signalverarbeitungsmittel enthalten Mittel zur Fehlererkennung und -ausschaltung, sodaß fehlerhafte Winkelgeschwindigkeits- oder Beschleunigungsinformationen eliminiert werden. Die so fehlerbereinigten Winkelgeschwindigkeits- und Beschleunigungsinformationen liefern Stabilisierungssignale für den Flugregler. Zweite Signalverarbeitungsmittel erhalten die fehlerbereinigten und ggf. integrierten Winkelgeschwindigkeits- und Beschleunigungsinformationen und liefern daraus Kurs- und Lagereferenzsignale.

Aus "IEEE Transactions on Industry Applications" Bd.24 (1988), 905-912 ist ein Verfahren zum Erkenen und Identifizieren von Fehlern an Sensoren für Zustandsgrößen bekannt. Die Zustandsgrößen sind mit den von den Sensoren unmittelbar gelieferten Meßgrößen durch eine Meßgleichung $\underline{m} = H \underline{x} + \underline{\varepsilon}$ verknüpft. Dabei ist $\underline{m}$ ein Vektor der Meßgrößen, $\underline{x}$ ein Vektor der Zustandsgrößen und $H$ die Meßmatrix. Es werden Validierungsvektoren $\underline{v}_k$ als Spaltenvektoren einer Matrix $P = [\underline{v}_1, \underline{v}_2...\underline{v}_n]$ bestimmt. Ferner wird ein Paritätsvektor $\underline{v}$ als Linearkombination der Validierungsvektoren mit den zugehörigen Elementen $m_i$ des Meßvektors $\underline{m}$ gebildet. Eine Detektionsfunktion wird durch den Absolutbetrag des Paritätsvektors gebildet. Wenn diese Detektionsfunktion einen vorgegebenen Grenzwert überschreitet, signalisiert dies das Vorhandensein eines Fehlers. Es wird dort auch ein Algorithmus zur Identifizierung dieses Fehlers vorgeschlagen.

Der Erfindung liegt die Aufgabe zugrunde, ein Verfahren und eine Vorrichtung zum Erkennen und Identifizieren von Fehlern an Sensoren zu schaffen, welches eine einfache Identifizierung eines Fehlers gestatte und auch für "Midvalue" oder "Soft Failures" der vorstehend geschilderten Art bauchbar ist.

Erfindungsgemäß wird diese Aufgabe, nach den Unabhängigen Ansprüchen, dadurch gelöst, daß
(d) bei Vorhandensein eines Fehlers
- jede Komponente ($p_l$) des Paritätsvektors mit den Elementen ($p_{ik}$) der zugehörigen Zeile (i) der von den Validierungsvektoren ($\underline{v}_k$) gebildeten Matrix (P) multipliziert wird,
- die so gebildeten Produkte für jeweils eine Spalte (k) dieser Matrix (P) zur Bildung einer Spalten-Produktsumme ($LF_k$; $\Delta_k$) aufaddiert werden, wobei jede Spalten-Produktsumme ($LF_k$; $\Delta_k$) einem der Sensorsignale zugeordnet ist,
- aus den Spalten-Produktsummen ($LF_k$; $\Delta_k$) Lokalisierungsfunktionen ($LF_k$; $LF_{k1}$) gebildet werden
- die größte der so gebildeten Lokalisierungsfunktion aufgesucht wird, wobei die dieser größten Lokalisierungsfunktion zugeordnete Sensorsignale als fehlerhaft erkannt werden, und
(e) eine Rekonfiguration der Sensorsignale unter Berücksichtigung des so ermittelten Fehlerstatus vorgenommen wird.

Vorteilhafterweise werden die Sensoren nacheinander den folgenden Prüfschritten unterworfen:
- einer Funktionsüberwachung,
- einer Plausibilitätsprüfung, in welcher geprüft wird, ob die jeweils erhaltenen Meßwerte sich in Übereinstimmung mit den dynamischen Eigenschaften des Systems befinden,
- einer Mehrheitsbetrachtung, bei welcher die aus den Signalen verschiedener Sensoren erhaltenen Zustandsgrößen miteinander verglichen werden, wobei Sensoren, deren Meßgrößen zu Zustandsgrößen führen, welche von den aus der Mehrheit der anderen Sensoren gewonnenen Zustandsgrößen deutlich abweichen, als fehlerhaft angesehen werden,
- der Überwachung anhand des Paritätsvektors und des Vergleichs mit Schwellwerten.

Die Ergebnisse der Prüfschritte werden nach einer Entscheidungsfunktion zur Entscheidung über gültige oder ungültige Sensorsignale verarbeitet. Aus den als gültig betrachteten Sensorsignalen werden nach einer fehlertoleranten, optimalen Schätzung Schätzwerte für die Zustandsgrößen gebildet und an eine Steuervorrichtung ausgegeben.

Die Meßmatrix ist bekannt. Daraus können die Validierungsvektoren a priori beispielsweise nach der Vorschrift

$$P = (I - H (H^T H)^{-1} H^T) = [\underline{v}_1 \underline{v}_2...\underline{v}_n]$$

berechnet und gespeichert werden. Aus den Meßwerten wird der Paritätsvektor gebildet. Es läßt sich zeigen, daß das skalare Produkt des Paritätsvektors mit sich selbst bei voll funktionsfähigen Sensoren unterhalb eines Schwellwertes liegt und bei Auftreten eines Fehlers diesen Schwellwert überschreitet. Aus den Komponenten des Paritätsvektors können nach der Erfindung Lokalisierungsfunktionen abgeleitet werden. Wenn das besagte skalare Produkt den Schwellwert überschreitet, also das Vorhandensein eines Fehlers signalisiert, dann liefert die jeweils maximale Lokalisierungsfunktion eine Anzeige, welcher Sensor den Fehler liefert. Diese Auswertung erfolgt natürlich automatisch mittels eines Rechners. Der Rechner liefert eine Anzeige, welcher Sensor defekt ist. Dadurch wird eine automatische Rekonfiguration eingeleitet, welche aus den verbleibenden Sensoren brauchbare Zustandsgrößen für die Steuerung oder Regelung erzeugt.

Die Erfindung betrifft auch eine Vorrichtung zum Erkennen und Identifizieren von Fehlern an Sensoren zur Zustandsgrößen, die mit von den Sensoren unmittelbar gelieferten Meßgrößen durch eine Meßgleichung der oben genannten Art verknüpft sind.

Diese Vorrichtung enthält wie bei der vorstehend diskutierten Anordnung nach "IEEE Transactions on Industry Applications" Mittel zur Festlegung von Validierungsvektoren $\underline{v}_j$ als Spaltenvektoren einer Matrix

$$P = [\underline{v}_1 \ \underline{v}_2 ... \underline{v}_n]$$

Mittel zur Bestimmung eines Paritätsvektors $\underline{v}$ als Element eines Paritätsraumes, der das orthogonale Komplement des Signalraumes ist als Linearkombination der Validierungsvektoren mit den zugehörigen Elementen $m_i$ des Meßvektors $\underline{m}$:

$$\underline{v} = \sum_{i=1}^{n} m_i \ \underline{v}_i = \left[ P_1 \ P_2 \ ... \ P_n \right]^T$$

Mittel zur Bildung einer Detektionsfunktion

$$DF = <\underline{v}; \underline{v}>$$

als skalares Produkt des Paritätsvektors mit sich selbst und Prüfung, ob diese Detektionsfunktion größer oder kleiner als ein vorgegebener Grenzwert ist, wobei das Überschreiten dieses Grenzwertes das Vorhandensein eines Fehlers signalisiert.

Erfindungsgemäß enthält die Vorrichtung weiterhin

(d) Mittel zum Multiplizieren jeder Komponente ($p_i$) des Paritätsvektors mit den Elementen ($P_{ik}$) der zugehörigen Zeile (i) der von den Validierungsvektoren ($v_k$) gebildeten Matrix (P),

(e) Mittel zum Aufaddieren der so gebildeten Produkte für jeweils eine Spalte (k) dieser Matrix (P) zur Bildung einer Spalten-Produktsumme ($LF_k$; $\Delta_k$), wobei jede Spalten-Produktsumme ($LF_k$; $\Delta_k$) eines der Sensorsignale zugeordnet ist,

(f) Mittel zum Aufsuchen der größten der so gebildeten Lokalisierungsfunktionen, wobei die dieser größten Lokalisierungsfunktion zugeordnete Sensorsignale als fehlerhaft erkannt werden, und

(g) Mittel zur Rekonfiguration der Sensorsignale unter Berücksichtigung des so ermittelten Fehlerstatus.

Ausführungsbeispiele der Erfindung sind nachstehend unter Bezugnahme auf die zugehörigen Zeichnungen näher erläutert.

Kurze Beschreibung der Zeichnungen

Fig.1 ist ein schematisches Blockdiagramm und zeigt den Grundaufbau einer Vorrichtung zur Erkennung Identifizierung von Fehlern an Sensoren und Rekonfiguration der Sensoren bei Auftreten von Fehlern.

Fig.2 ist ein schematisches Blockdiagramm der Vorrichtung von Fig. 1 und zeigt im einzelnen die verschiedenen Mittel zur Erkennung und Identifizierung von Fehlern von Sensoren, die hier als zweiachsige Kreisel und Beschleunigungsmesser dargestellt sind.

Fig.3 veranschaulicht die Mehrheitsbetrachtung bei den Sensoren von Fig.2.

Fig.4 zeigt ein Netzwerk durch welches der Paritätsvektor, die Detektionsfunktion und die Lokalisierungsfunktionen gebildet werden.

Fig.5 zeigt ein Netzwerk ähnlich Fig.4 zur Erkennung und Identifizierung von zweiachsigen Fehlern, wie sie bei zweiachsigen, dynamisch abgestimmten Kreiseln zu erwarten sind.

Fig.6 zeigt schematisch den Aufbau der Mittel zur Entscheidungsfindung über defekte und funktionsfähige Sensoren.

Fig.7 ist ein Venn-Diagramm zur Erläuterung einer Möglichkeit der Entscheidungsfindung in den entscheidungsfindenden Mitteln von Fig.6.

Fig.8 ist eine Logikschaltung zur Realisierung der Verknüpfung nach dem Venn-Diagramm von Fig.7.

Fig.9 veranschaulicht die Erzeugung der Ausgangsdaten.

## Bevorzugte Ausführungen der Erfindung

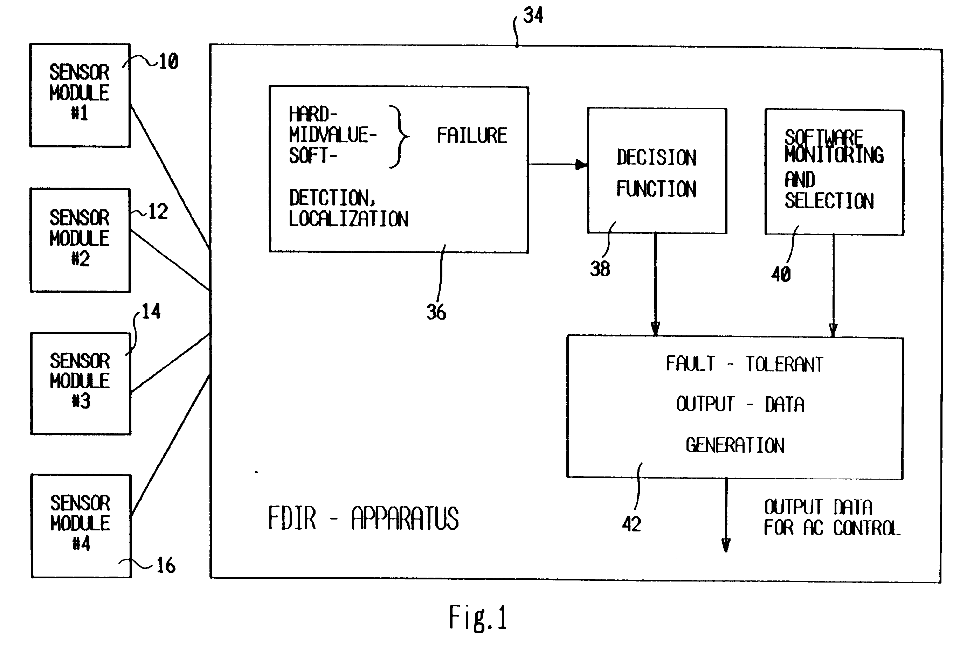

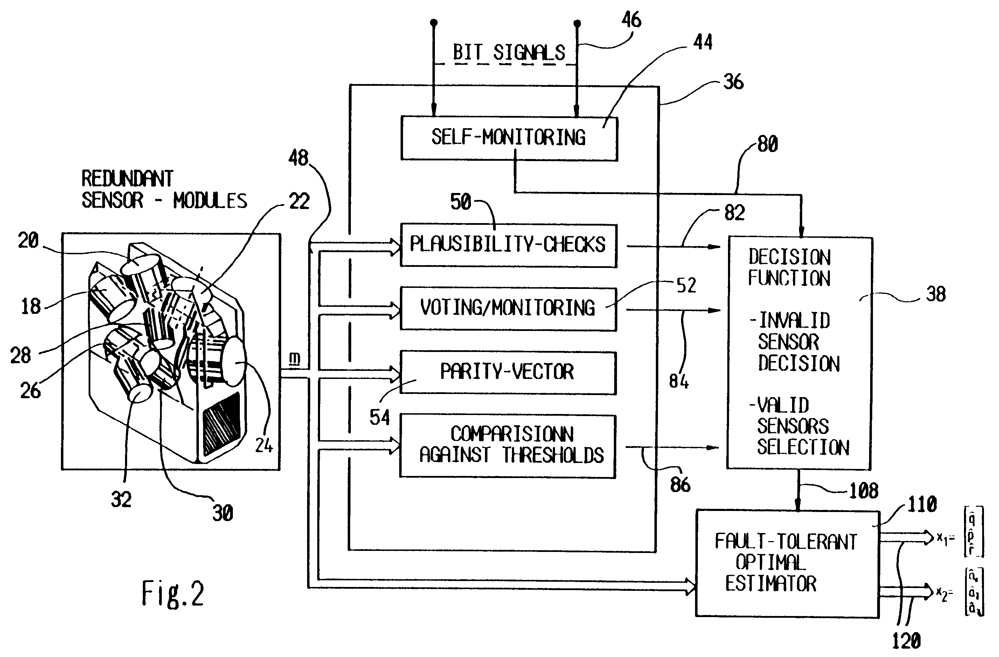

Bei der Ausführung nach Fig.1 sind vier identische Kanäle vorgesehen, die als Sensor-Module 10, 12, 14 und 16 bezeichnet werden. Wie aus Fig.2 erkennbar ist, enthält jedes Sensor-Modul einen zweiachsigen, elektrisch gefesselten, dynamisch abgestimmten Kreisel 18,20,22 und 24 und einen Beschleunigungsmesser 26, 28, 30 und 32. Die Anordnung entspricht der in der DE-A1-36 34 023 beschriebenen Ausführung.

Die Information von allen vier Sensor-Modulen 10,12,14 und 16 wird auf eine Einheit 34 zur Fehlererkennung, Fehleridentifizierung und Sensorrekonfiguration gegeben. Diese Einheit 34 erfüllt die folgenden Funktionen: Die Einheit 34 erkennt und identifiziert "Hard Failures", also den vollständigen Ausfall von Sensoren, sowie "Midvalue Failures" und "Soft Failures". Das ist durch Block 36 dargestellt. Die Einheit 34 fällt eine Entscheidung darüber, welcher Sensor als fehlerhaft anzusehen ist. Das ist durch Block 38 dargestellt. Weiterhin enthält die Einheit 34 Mittel 40 zur Überwachung der Software. Diese Mittel sind Gegenstand der Patentanmeldung P 39 23 432.0 und daher hier nicht näher beschrieben. Die Statusinformation von den Blöcken 38 und 40 ist auf Rekonfigurationsmittel 42 zur fehlertoleranten Erzeugung von Ausgangsdaten aufgeschaltet. Diese Ausgangsdaten dienen z.B. in der in der DE-A1-36 34 023 beschriebenen Weise zur Flugregelung und zur Erzeugung einer Kurs- und Lagereferenz.

In Fig.2 sind die verschiedenen Stufen der Fehlererkennung und Fehleridentifizierung gemäß Block 36 von Fig.1 im einzelnen dargestellt.

Es erfolgt zunächst eine Selbstüberwachung jedes einzelnen Sensors durch in den Sensor selbst eingebaute Prüfeinrichtungen. Es kann beispielsweise geprüft werden, ob ein Kreisel Strom erhält oder ob der Kreisel läuft, ob der Fesselkreis geschlossen ist, ob überhaupt ein Signal geliefert wird usw. Diese Selbstüberwachung ist durch Block 44 in Fig.2 dargestellt. Block 44 erhält Signale von den Überwachungseinrichtungen an den Sensoren selbst über Eingänge 46. Diese Selbstüberwachung von Sensoren ist an sich allgemein bekannt und daher hier nicht im einzelnen beschrieben.

An die geschilderte Selbstüberwachung gemäß Block 44 schließt sich eine Plausibilitätsprüfung an. Es wird geprüft, ob die von den Sensoren 18,20,22,24, 26,28,30 und 32 über die Leitungen 48 erhaltenen Signale beispielsweise mit den dynamischen Eigenschaften des Flugzeugs vereinbar sind. Es können so Störsignale eliminiert werden. Diese Plausibilitätsprüfung ist durch einen Block 50 dargestellt.

Der nächste Überwachungsschritt ist eine Mehrheitsbetrachtung. Diese ist in Fig.2 durch Block 52 dargestellt. Bei üblicher Mehrheitsbetrachtung ("Voting Monitoring") sind drei identische Sensoren vorgesehen. Ein Sensor wird als fehlerhaft angesehen, wenn die beiden übrigen Sensoren innerhalb bestimmter Schwellwerte übereinstimmende Signale liefern und das Signal des betreffenden Sensors von diesen Signalen deutlich abweicht. Dieses Verfahren bietet Schwierigkeiten, wenn die Sensoren nicht nominell gleiche Signale liefern sondern beispielsweise Drehgeschwindigkeiten um verschiedene Eingangsachsen, wie das im vorliegenden Fall mit den Kreiseln 18,20,22 und 24 der Fall ist, oder Beschleunigungen längs unterschiedlicher Achsen wie die Beschleunigungsmesser 26,28,30 und 32. Die schon erwähnte DE-A1-36 40 023 liefert eine Lösung dieses Problems für eine spezielle geometrische Anordnung der Sensoren.

Es hat sich gezeigt, daß ein Kriterium für eine Mehrheitsbetrachtung für beliebig angeordnete zweiachsige Kreisel durch die Bedingung erhalten werden kann:

$$1/\,(\underline{h_i}x\underline{h_j}) * < (m_{ix}\underline{g_{ix}} - m_{jx}\underline{g_{jx}}) + m_{iy}\underline{g_{iy}} - m_{jy}\underline{g_{jy}});<\underline{h_i}x\underline{h_j} >>< E_{ij}$$

Darin sind:

$m_{ix}, m_{iy}$   die Meßsignale des i-ten Kreisels um dessen x-bzw. y-Eingangsachse,

$\underline{g_{ix}}, \underline{g_{iy}}$   die Einheitsvektoren in Richtung der x-Eingangsachse bzw. der y-Eingangsachse des i-ten Kreisels,

$\underline{h_i}$   der Einheitsvektor in Richtung der Drallachse des i-ten Kreisels,

$E_{ij}$   vorgegebene Schwellwerte,

$< \underline{a}, \underline{b} >$   das skalare Produkt von Vektoren $\underline{a}$ und $\underline{b}$,

$(\underline{a}x\underline{b})$   das Vektorprodukt der Vektoren $\underline{a}$ und $\underline{b}$.

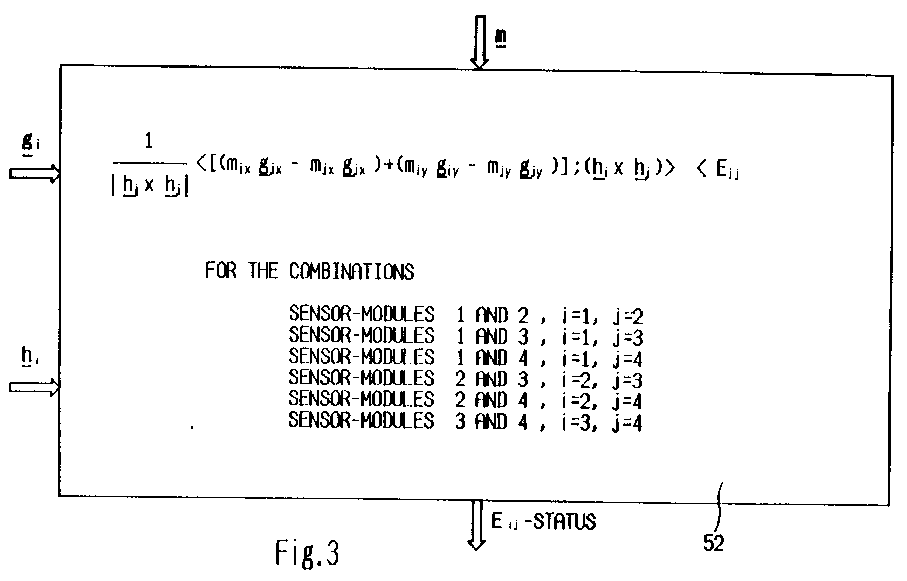

Dieses Kriterium wird auf alle möglichen Kombinationen von Paaren von Kreiseln 18,20,22 und 24 oder -allgemeiner-Sensor-Moduln 10,12,14 und 16 angewandt. Daraus ergibt sich ein "$E_{ij}$-Status", der angibt, für welche Paare von Sensor-Moduln die Schwellwerte überschritten werden. Aus diesem $E_{ij}$-Status läßt sich ein defektes Sensor-Modul bestimmen. Nach diesem Prinzip arbeitet die Mehrheitsbetrachtung gemäß Block 52. In Fig.3 ist das noch einmal gesondert dargestellt. Die $m_{ix}$ und $m_{iy}$ werden von dem Meßvektor $\underline{m}$ geliefert. Die Vektoren $\underline{g_{ix}}, \underline{g_{iy}}$ und $\underline{h_j}$ sind aus der Geometrie der Anordnung bekannt und gespeichert.

Der nächste Schritt dient dazu, auch "Midvalue" und "Soft Failures" zu erkennen. Dieser Schritt ist in Fig.2 durch einen Block 54 dargestellt.

Hierzu wird für das vorliegende System eine "Meßmatrix" H bestimmt, welche alle von den Sensoren gelieferten Meßgrößen, die zu einem "Meßvektor" $\underline{m}$ zusammengefaßt werden, mit allen für die Regelung, hier für die Flugregelung, benötigten Zustandsgrößen verknüpft. Im vorliegenden Falle sind das die insgesamt acht Signale $m_{ix}$ und $m_{iy}$ der Kreisel 18,20,22 und 24 und die Signale der Beschleunigungsmesser 26,28,30 und 32. Die ausgegebenen Zustandsgrößen sind die Drehgeschwindigkeiten p,q,r um die flugzeugfesten Achsen und die Beschleunigungen $a_x,a_y,a_z$. Die Elemente der Meßmatrix enthält im vorliegenden Beispiel geometrische Größen. Die Meßmatrix kann aber auch physikalische Größen enthalten, wenn noch andere Sensoren, beispielsweise ein Doppler-Radar oder ein Laserkreisel, zur Bildung von Zustandsgrößen Herangezogen werden. Es wird nun -a priori- eine Matrix **P** beispielsweise wie folgt berechnet:

$$\mathbf{P} = (\mathbf{I} - \mathbf{H}(\mathbf{H}^T\mathbf{H})^{-1}\mathbf{H}^T) = [\underline{v}_1\underline{v}_2...\underline{v}_n].$$

Die Spaltenvektoren dieser Matrix P mit den Komponenten $p_{11},p_{12},..p_{m1}$; $p_{21},p_{22},..p_{m2}$; ... $p_{1n},p_{2n}..p_{mn}$ bilden "Validierungsvektoren" $\underline{v}_j$, von denen jeder einem Element des Meßvektors $\underline{m}$ zugeordnet ist. Diese Validierungsvektoren sind gespeichert.

Die Matrix **P** ist eine mxn-Matrix mit m<n. Entsprechend sind die Validierungsvektoren von der Ordnung m<n. Es gibt n solche Validierungsvektoren.

Es wird nun in einem Rechner jeder Validierungsvektor $\underline{v}_i$ mit der zugehörigen Komponente $m_i$ des Meßvektors $\underline{m}$ multipliziert. Das ergibt einen "Paritätsvektor" $\underline{v}$ mit den Komponenten $[p_1,p_2,...p_m]$.

$$\underline{v} = \sum_{i=1}^{n} m_i \underline{v}_i$$

Für die einzelnen Komponenten des Paritätsvektors ergibt sich damit:

$$p_1 = p_{11}m_1 + p_{12}m_2 + ...p_{1m}m_m$$
$$p_2 = p_{21}m_1 + p_{22}m_2 + ...p_{2m}m_m$$

usw. Dieser Paritätsvektor ist ein Element des Paritätsraumes, der das orthogonale Komplement des Signalraumes ist.

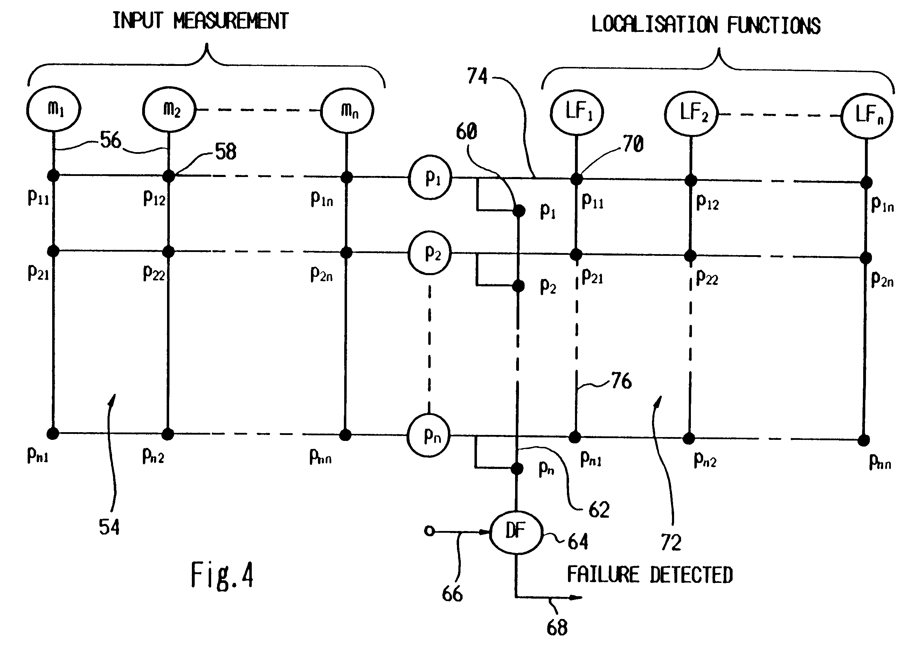

Fig.4 zeigt schematisch die Bildung des Paritätsvektors. An dem Netzwerk 54 liegen an Eingängen 56 die Komponenten des Meßvektors $\underline{m}$, also die Meßgrößen $m_1,m_2..m_n$, an. Diese Komponenten werden in den Knotenpunkten 58, die Multiplizierglieder darstellen können, jeweils mit den dort angegebenen Elementen der Matrix **P** oder Komponenten des zugehörigen Validierungsvektors $\underline{v}_i$ multipliziert, beispielsweise $m_2$ mit $p_{12}$. Die Produkte werden nach rechts hin aufsummiert und liefern die Komponenten $p_1..p_m$ des Paritätsvektors $\underline{v}$.

Es wird jetzt eine "Detektionsfunktion" DF gebildet. Eine solche Detektionsfunktion DF ist das skalare Produkt des Paritätsvektors mit sich selbst:

$$DF = <\underline{v};\underline{v}>.$$

Das ist in Fig.4 durch Multiplizierglieder 60 dargestellt, an denen die Komponenten $p_1$, $p_2$ usw. des Paritätsvektors liegen und die diese Komponenten jeweils mit sich selbst multiplizieren und so $p_1^2,p_2^2$ usw. liefern. Diese Quadrate werden längs der vertikalen Verbindung 62 aufsummiert und liefern DF, wie durch Kreis symbolisiert ist. Die Detektionsfunktion DF wird mit einem Schwellwert E verglichen, der auf einen Eingang 66 aufgeschaltet ist. Wenn die Detektionsfunktion DF diesen Schwellwert E überschreitet, wird an einem Ausgang 68 ein Fehler signalisiert.

In diesem Falle werden "Lokalisierungsfunktionen" $LF_i$ gebildet. Das ist im rechten Teil von Fig.4 dargestellt.

Zur Bildung der Lokalisierungsfunktionen werden die Komponenten des Paritätsvektor $p_1$, $p_2$, ... $p_n$ mit Komponenten $p_{11}$, $p_{12}$ usw. der Validierungsvektoren $\underline{v}_i$ multipliziert. Die Knotenpunkte 70 des Netzwerkes 72 können als Multiplizierglieder betrachtet werden, die wieder die an Eingängen 74 dieses Netzwerkes 72 anliegenden Komponenten $p_1$, $p_2$ ... $p_n$ des Paritätsvektors $\underline{v}$ mit den danebenstehenden Matrixelementen $p_{11}$ usw. multiplizieren. Die erhaltenen Produkte werden längs der vertikalen Verbindungen 76 aufsummiert und liefern die Lokalisierungsfunktionen $LF_i$.

Es wird nun die maximale Lokalisierungsfunktion

$$LF_j = \max LF_i , i = 1,2...n$$

aufgesucht. Diese charakterisiert den fehlerhaften Sensor.

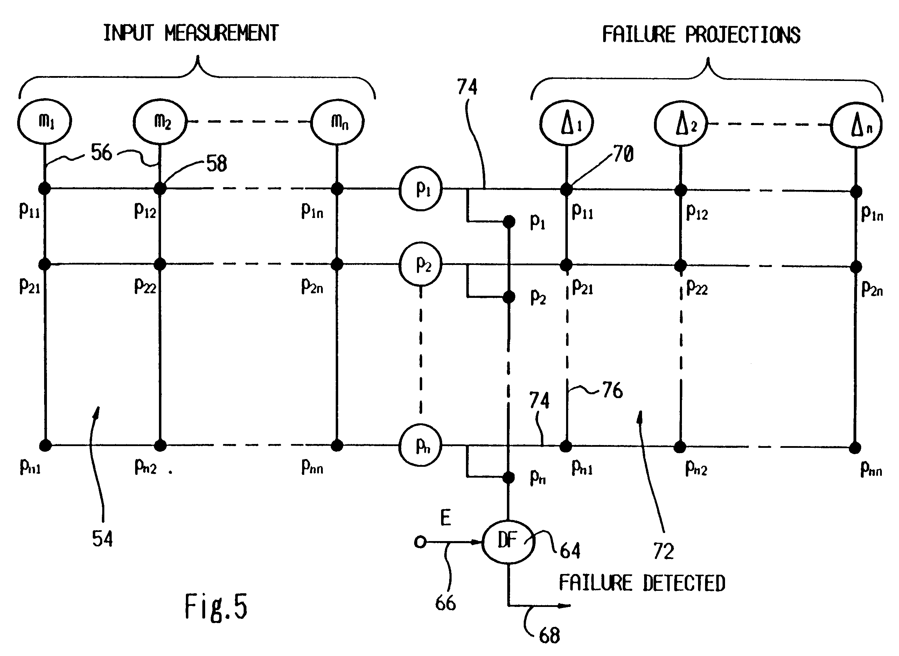

Bei Verwendung von dynamisch abgestimmten Kreiseln, wie sie in dem vorliegenden Ausführungsbeispiel als Sensoren vorgesehen sind, besteht eine gewisse Wahrscheinlichkeit dafür, daß ein Fehler gleichzeitig auf beiden Eingangsachsen des Kreisels auftritt. Fig.5 zeigt eine Anordnung, welche diesem Sachverhalt Rechnung tragen kann.

Im linken Teil von Fig.5 wird in der gleichen Weise wie in Fig.4 der Paritätsvektor $\underline{v}$ aus dem Meßvektor $\underline{m}$ und den Validierungsvektoren $\underline{v}_i$ gebildet. Auch die Bildung der Detektionsfunktion DF und der Vergleich der

Detektionsfunktion mit einem Schwellwert zum Erkennen eines Fehlers ist die gleiche wie in Fig.4. Entsprechende Teile sind in Fig.5 mit den gleichen Bezugszeichen versehen wie in Fig.4.

Es werden auch Funktionen durch Multiplikation der Komponenten $p_i$ des Paritätsvektors $\underline{v}$ mit den Elementen der Matrix $\mathbf{P}$ gebildet. In Fig.5 werden, wie in Fig.4, waagerecht die Komponenten des Paritätsvektors $\underline{v}$, z.B. $p_1$ mit den Matrixelementen $p_{11}, p_{12}, \ldots p_{1n}$ multipliziert und längs der vertikalen Verbindung des Netzwerkes 72 aufsummiert. Auch insofern stimmt die Anordnung von Fig.5 mit der Anordnung von Fig.4 überein, und auch hier sind entsprechende Teile mit den gleichen Bezugszeichen versehen wie in Fig.4. Die Summation längs der vertikalen Verbindungen des Netzwerkes liefern jedoch nicht unmittelbar die Lokalisierungsfunktionen sondern Funktionen $\Delta_1, \Delta_2, \Delta_3 \ldots \Delta_n$. Aus den $\Delta_i$ mit $1 \leqq i \leqq n$ werden Lokalisierungsfunktionen von der Form

$$LF(k,l) = \Delta_k \underline{v}_k + \Delta_l \underline{v}_l{}^2$$

mit $1 \leqq l \leqq n$ und $1 \leqq k \leqq n$ gebildet, wobei die k und l stets den beiden Eingangsachsen eines dynamisch abgestimmten Kreisels zugeordnet sind. Die $\Delta_i$ sind ein Maß für die Projektion eines Fehlers auf die Validierungsvektoren $\underline{v}_i$. Es wird die maximale Lokalisierungsfunktion

$$LF(i,j) = \max LF(k,l)$$

aufgesucht. Aus dieser maximalen Lokalisierungsfunktion kann auf einen Defekt des zugeordneten Sensors mit den Eingangsachsen i und j geschlossen werden.

Der Statusausgang 80 der Selbstüberwachung 44, der Statusausgang 82 der Plausibilitätsprüfung 50, der Statusausgang der Mehrheitsbetrachtung 52 und der durch Vergleich des Paritätsvektors mit einem Schwellwert, dargestellt durch Block 84, erhaltene Statusausgang 86 sind auf die entscheidungsfindenden Mittel 88 geschaltet. Die entscheidungsfindenden Mittel liefern Statusinformation darüber, welche der Sensoren 18 bis 32 als fehlerbehaftet und welche als funktionierend angesehen werden sollen.

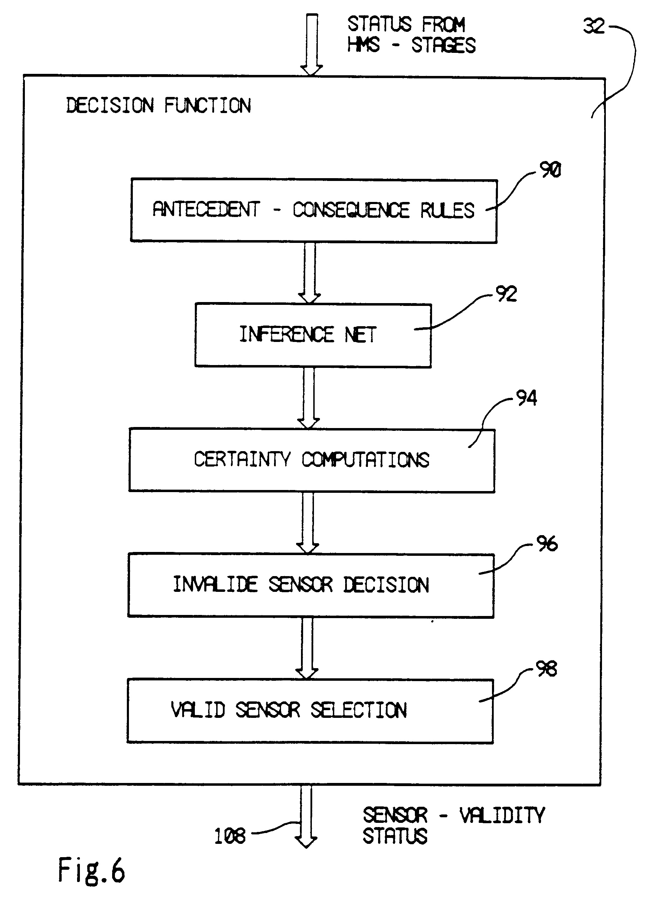

Fig.6 zeigt schematisch die Funktion dieser entscheidungsfindenden Mittel. Die entscheidungsfindenden Mittel berücksichtigen, welchen Grad von Zuverlässigkeit die Statusaussagen der verschiedenen Prüfschritte besitzen.

Es werden zunächst Regeln für Voraussetzungen und Folgen (wenn, dann) aufgestellt. Das ist in Fig.6 durch Block 90 dargestellt. Aufgrund dieser Regeln ergibt sich ein Inferenznetz, das durch Block 92 angedeutet ist. Die so erhaltenen Entscheidungen sind selten sicher. Es schließen sich daher an die auf den Regeln für Voraussetzungen und Folgen basierenden Entscheidungsfindung Bestimmtheitsrechnungen (certainty computations) an. Das ist durch Block 94 dargestellt. Für diese Bestimmtheitsrechnungen können bekannte Techniken angewandt werden. Es muß jedoch für jede individuelle Anwendung ein spezielles Inferenznetz vorgesehen sein.

Aus dem Ergebnis der Bestimmtheitsrechnung wird eine Entscheidung gefunden, welcher Sensor als fehlerhaft angesehen wird (Block 96) und welcher Sensor brauchbar ist (Block 98). Wie dargestellt, liefern die entscheidungsfindenden Mittel 32 Statusinformation, welche die brauchbaren Sensoren angibt.

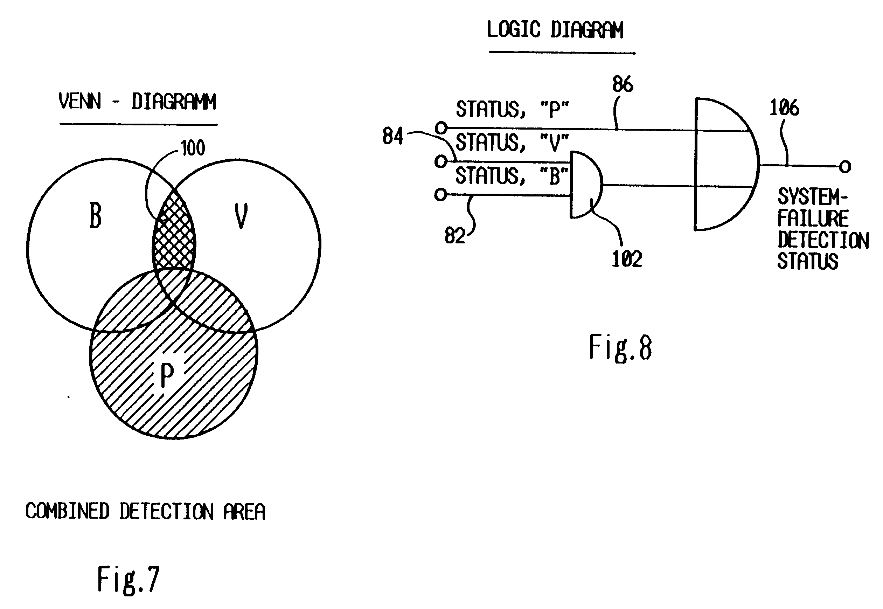

Ein vereinfachtes Beispiel für eine solche Entscheidungsfunktion ist nachstehend unter Bezugnahme auf Fig.7 und 8 erläutert:

Die einzelnen Elemente der Einheit 36 in Fig.2 erzeugen einen Fehlererkennungs-Status wie folgt:
- Die Selbstüberwachung 44 (BITE) kombiniert mit der Plausibilitätsprüfung 50 erzeugen an dem Status-Ausgang 82 einen Status "B".
- Die Mehrheitsbetrachtung 52 erzeugt an dem Status-Ausgang 84 einen Status "V".
- Die Prüfung 54 aufgrund des Paritätsvektors erzeugt an einem Status-Ausgang 86 einen Status "P".

Das folgende Kriterium wird für die kombinatorische Korrelation der mehrfachen Statusinformation der Einheit 36 festgelegt:
- Ein Fehler des Systems wird erkannt, wenn entweder der Status "P" oder aber der Status "B" und gleichzeitig der Status "V" einen Fehler signalisiert.

Das ist in Fig.7 an einem Venn-Diagramm verdeutlicht: Ein Fehler wird entdeckt in der gesamten Menge "P" und zuzüglich in der Schnittmenge 100 der Mengen "B" und "V". In Fig.8 ist das als Logikschaltung dargestellt, wobei "wahr" oder "unwahr" durch Signale L oder H an den drei Eingängen 82,84 und 86 der entscheidungsfindenden Mittel 38 signalisiert sind. Die Eingänge 82 und 84 liegen an den beiden Eingängen eines UND-Gliedes 102. Der Ausgang 104 des UND-Gliedes 102 und der Eingang 86 liegen an den Eingängen eines ODER-Gliedes 106. Der Ausgang 106 liefert ein Fehlererkennungssignal.

Die kombinierte Wahrscheinlichkeit der Fehlererkennung kann berechnet werden als

$$Pr(det) = Pr(P) + Pr(BV) * (1 - Pr(P)),$$

wenn $Pr(P)$ die Wahrscheinlichkeit der Fehlererkennung mittels des Elements des Paritätsvektors ist und $Pr(BV)$ die kombinierte Wahrscheinlichkeit der Fehlererkennung mittels der Selbstüberwachung und der Mehrheitsbetrachtung ist.

Die Fehlerstatussignale der verschiedenen Sensoren werden von den entscheidungsfindenden Mitteln 38 über Ausgang 108 auf einen fehlertoleranten, optimalen Schätzer 110 gegeben. Der Schätzer 110 erzeugt aus den als zutreffend angesehenen Sensorsignalen Schätzwerte der Zustandsgrößen.

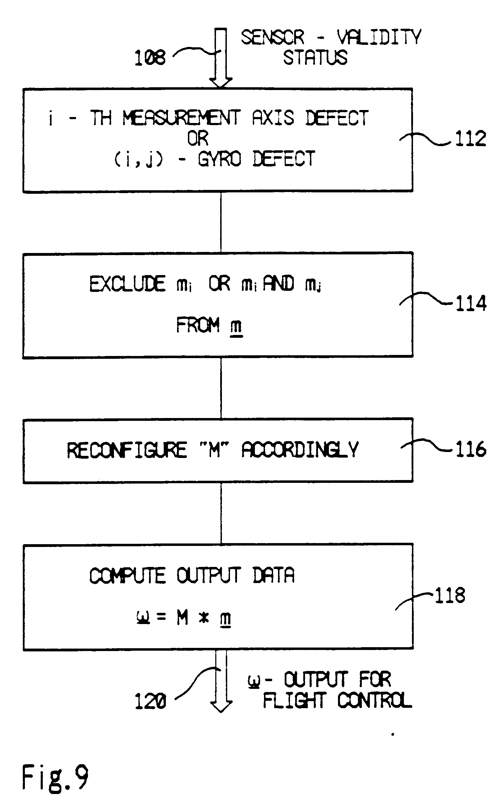

Die Funktion dieses Schätzers 110 ist in Fig.9 für den vorliegenden Fall der Trägheitssensoren für die Flugregelung schematisch dargestellt.

Aus der Statusinformation vom Ausgang 108 der entscheidungsfindenden Mittel wird abgeleitet, daß z.B. die i-te Meßachse oder der Kreisel mit den Eingangsachsen (i,j) defekt ist (Block 112). Dementsprechend werden die Meßgrößen $m_i$ bzw. $m_i$ und $m_j$ von der weiteren Signalverarbeitung ausgeschlossen. Das ist durch Block 114 dargestellt.

Der Vektor der für die Flugregelung benötigten Zustandsgrößen sei $\underline{\omega}$. Dieser Vektor hängt mit dem Meßvektor $\underline{m}$ durch eine lineare Beziehung

$$\underline{\omega} = \mathbf{M} * \underline{m}.$$

Als nächster Schritt erfolgt eine Rekonfiguration der Matrix $\mathbf{M}$, so daß dem Wegfall eines Sensors oder mehrerer Sensoren Rechnung getragen wird. Das ist durch Block 116 dargestellt. Mit der rekonfigurierten Matrix $\mathbf{M}$ werden Schätzwerte für den Vektor $\underline{\omega}$ gebildet. Das ist durch Block 118 dargestellt. Die so erhaltenen Schätzwerte werden auf einen Ausgang 120 gegeben und auf den Flugregler aufgeschaltet.

Die Matrix $\mathbf{M}$ setzt jeweils die verfügbaren, redundanten Messungen in beste Schätzungen orthogonaler Drehgeschwindigkeiten und Beschleunigungen um. Für die optimale Schätzung der Drehgeschwindigkeiten können bewährte Methoden der kleinsten Fehlerquadrate dienen.

**Patentansprüche**

1. Verfahren zum Erkennen und Identifizieren von Fehlern an Sensoren für Zustandsgrößen, die mit von den Sensoren unmittelbar gelieferten Meßgrößen durch eine Meßgleichung

$$\underline{m} = H\underline{x} + \underline{\varepsilon}$$

verknüpft sind, wobei $\underline{m}$ ein Vektor der Meßgrößen, $\underline{x}$ ein Vektor der Zustandsgrößen und H die Meßmatrix ist und wobei die Ordnung von $\underline{m}$ größer ist als die Ordnung von $\underline{x}$,
mit den Verfahrensschritten
(a) Bestimmung von Validierungsvektoren $\underline{v}_k$ als Spaltenvektoren einer Matrix

$$P = [\underline{v}_1 \ \underline{v}_2 ... \underline{v}_n]$$

(b) Bestimmung eines Paritätsvektors $\underline{v}$ als Element eines Paritätsraumes, der das orthogonale Komplement des Signalraumes ist als Linearkombination der Validierungsvektoren mit den zugehörigen Elementen $m_i$ des Meßvektors $\underline{m}$:

$$\underline{v} = \sum_{i=1}^{n} m_i \ \underline{v}_i = \left[ P_1 \ P_2 \ ... \ P_n \right]^T$$

(c) Bildung einer Detektionsfunktion

$$DF = <\underline{v}; \underline{v}>$$

als skalares Produkt des Paritätsvektors mit sich selbst, und Prüfung, ob diese Detektionsfunktion größer oder kleiner als ein vorgegebener Grenzwert ist, wobei das Überschreiten dieses Grenzwertes das Vorhandensein eines Fehlers signalisiert,
**dadurch gekennzeichnet, daß**
(d) bei Vorhandensein eines Fehlers
- jede Komponente ($p_i$) des Paritätsvektors mit den Elementen ($p_{ik}$) der zugehörigen Zeile (i) der von den Validierungsvektoren ($\underline{v}_k$) gebildeten Matrix (P) multipliziert wird,
- die so gebildeten Produkte für jeweils eine Spalte (k) dieser Matrix (P) zur Bildung einer Spalten-Produktsumme ($LF_k$; $\Delta_k$) aufaddiert werden, wobei jede Spalten-Produktsumme ($LF_k$; $\Delta_k$) einem der Sensorsignale zugeordnet ist,
- aus den Spalten-Produktsummen ($LF_k$; $\Delta_k$) Lokalisierungsfunktionen ($LF_k$; $LF_{k1}$) gebildet werden
- die größte der so gebildeten Lokalisierungsfunktionen aufgesucht wird, wobei die dieser größten Lokalisierungsfunktion zugeordnete Sensorsignale als fehlerhaft erkannt werden, und
(e) eine Rekonfiguration der Sensorsignale unter Berücksichtigung des so ermittelten Fehlerstatus vorgenommen wird.

2. Verfahren Anspruch 1 **dadurch gekennzeichnet, daß** die so gebildeten Produkte für jeweils eine Spalte (k) dieser Matrix (P) zur Bildung einer Lokalisierungsfunktion aufaddiert werden, wobei jeder Lokalisierungsfunktion ($LF_k$) eines der Sensorsignale zugeordnet ist,

3. Verfahren Anspruch 1 **dadurch gekennzeichnet, daß**
   (a) aus den Spalten-Produktsummen Lokalisierungsfunktionen

$$LF(k,l) = \left| \Delta_k \, \underline{v_k} + \Delta_l \, \underline{v_l} \right|^2$$

mit $1 \leqq l \leqq n$ und $1 \leqq k \leqq n$ gebildet werden, wobei die k und l jeweils Paaren von zusammengehörigen Sensorsignalen zugeordnet sind, bei denen das gleichzeitige Auftreten von Fehlern wahrscheinlich ist, und
   (b) die größte der so gebildeten Lokalisierungsfunktionen aufgesucht wird, wobei das dieser größten Lokalisierungsfunktion zugeordnete Paar (k,l) von Sensorsignal als fehlerhaft erkannt wird.

4. Verfahren nach Anspruch 2 oder 3, **dadurch gekennzeichnet, daß**
   (a) die Sensoren nacheinander den folgenden Prüfschritten unterworfen werden:
      - einer Funktionsüberwachung,
      - einer Plausibilitätsprüfung, in welcher geprüft wird, ob die jeweils erhaltenen Meßwerte sich in Übereinstimmung mit den dynamischen Eigenschaften des Systems befinden,
      - einer Mehrheitsbetrachtung, bei welcher die aus den Signalen verschiedener Sensoren erhaltenen Zustandsgrößen miteinander verglichen werden, wobei Sensoren, deren Meßgrößen zu Zustandsgrößen führen, welche von den aus der Mehrheit der anderen Sensoren gewonnenen Zustandsgrößen deutlich abweichen, als fehlerhaft angesehen werden,
      - der Überwachung anhand des Paritätsvektors und des Vergleichs mit Schwellwerten,
   (b) die Ergebnisse der Prüfschritte nach einer Entscheidungsfunktion zur Entscheidung über gültige oder ungültige Sensorsignale verarbeitet werden und
   (c) aus den als gültig betrachteten Sensorsignalen nach einer fehlertoleranten, optimalen Schätzung Schätzwerte für die Zustandsgrößen gebildet und an eine Steuervorrichtung ausgegeben werden.

5. Verfahren nach Anspruch 4, **dadurch gekennzeichnet, daß**
   (a) als Kriterium für eine Mehrheitsbetrachtung für beliebig angeordnete zweiachsige Kreisel die nachstehende Bedingung dient:

$$1/\left( \underline{h_i} \times \underline{h_j} \right)^* \quad \left\langle \left( m_{ix} \, \underline{g_{ix}} - m_{jx} \, \underline{g_{jx}} \right) + \left( m_{iy} \underline{g_{iy}} - m_{jy} \underline{g_{jy}} \right); \quad \left( \underline{h_i} \times \underline{h_j} \right) \right\rangle \quad < E_{ij}$$

wobei
$m_{ix}$, $m_{iy}$      die Meßsignale des i-ten Kreisels um dessen x- bzw. y-Eingangsachse,
$\underline{g_{ix}}$, $\underline{g_{iy}}$      die Einheitsvektoren in Richtung der x-Eingangsachse bzw. der y-Eingangsachse des i-ten Kreisels,
$\underline{h_i}$      der Einheitsvektor in Richtung der Drallachse des i-ten Kreisels,
$\underline{E_{ij}}$      vorgegebene Schwellwerte,
<a; b>      das skalare Produkt von Vektoren $\underline{a}$ und $\underline{b}$ und
$(\underline{a} \times \underline{b})$      das Vektorprodukt der Vektoren $\underline{a}$ und $\underline{b}$ sind,
   (b) dieses Kriterium auf alle möglichen Kombinationen von Paaren von Kreiseln angewandt wird,
   (c) daraus eine Status-Information gewonnen wird, die angibt, für welche Paare von Kreiseln die Schwellwerte überschritten werden und
   (d) aus dieser Status-Information ein defekter Kreisel bestimmt wird.

6. Vorrichtung zum Erkennen und Identifizieren von Fehlern an Sensoren für Zustandsgrößen, die mit von den Sensoren unmittelbar gelieferten Meßgrößen durch eine Meßgleichung

$$\underline{m} = H\underline{x} + \varepsilon$$

verknüpft sind, wobei $\underline{m}$ ein Vektor der Meßgrößen, $\underline{x}$ ein Vektor der Zustandsgrößen und H die Meßmatrix ist und wobei die Ordnung von $\underline{m}$ größer ist als die Ordnung von $\underline{x}$, enthaltend

(a) Mittel zur Festlegung von Validierungsvektoren $\underline{v}_i$ als Spaltenvektoren einer Matrix

$$P = [\underline{v}_1 \ \underline{v}_2 ... \underline{v}_n]$$

(b) Mittel zur Bestimmung eines Paritätsvektors $\underline{v}$ als Element eines Paritätsraumes, der das orthogonale Komplement des Signalraumes ist als Linearkombination der Validierungsvektoren mit den zugehörigen Elementen $m_i$ des Meßvektors $\underline{m}$:

$$\underline{v} = \sum_{i=1}^{n} m_i \ \underline{v}_i = \begin{bmatrix} P_1 & P_2 & ... & P_n \end{bmatrix}^T$$

(c) Mittel zur Bildung einer Detektionsfunktion

$$DF = <\underline{v}; \underline{v}>$$

als skalares Produkt des Paritätsvektors mit sich selbst, und Prüfung, ob diese Detektionsfunktion größer oder kleiner als ein vorgegebener Grenzwert ist, wobei das Überschreiten dieses Grenzwertes das Vorhandensein eines Fehlers signalisiert, **gekennzeichnet durch**

(d) Mittel zum Multiplizieren jeder Komponente ($p_i$) des Paritätsvektors mit den Elementen ($P_{ik}$) der zugehörigen Zeile (i) der von den Validierungsvektoren ($v_k$) gebildeten Matrix (P),

(e) Mittel zum Aufaddieren der so gebildeten Produkte für jeweils eine Spalte (k) dieser Matrix (P) zur Bildung einer Spalten-Produktsumme ($LF_k$; $\Delta_k$), wobei jede Spalten-Produktsumme ($LF_k$) eines der Sensorsignale zugeordnet ist,

(f) Mittel zum Aufsuchen der größten der so gebildeten Lokalisierungsfunktionen, wobei die dieser größten Lokalisierungsfunktion zugeordnete Sensorsignale als fehlerhaft erkannt werden, und

(g) Mittel zur Rekonfiguration der Sensorsignale unter Berücksichtigung des so ermittelten Fehlerstatus.

7.   Vorrichtung nach Anspruch 6 **dadurch gekennzeichnet, daß** die Mittel zum Aufaddieren der so gebildeten Produkte für jeweils eine Spalte (k) dieser Matrix (P) zur Bildung einer Lokalisierungsfunktion ($LF_k$) dienen, wobei jeder Lokalisierungsfunktion ($LF_k$) eines der Sensorsignale zugeordnet ist.

8.   Vorrichtung nach Anspruch 6 **dadurch gekennzeichnet, daß**

(a) die Mittel zur Bildung von Lokalisierungsfunktionen

$$LF(k,l) = \left| \Delta_k \ \underline{v}_k + \Delta_l \ \underline{v}_l \right|^2$$

mit $1 \leq l \leq n$ und $1 \leq k \leq n$ eingerichtet sind, wobei die k und l jeweils Paaren von zusammengehörigen Sensorsignalen zugeordnet sind, bei denen das gleichzeitige Auftreten von Fehlern wahrscheinlich ist,

(b) die Mittel zum Aufsuchen der größten der so gebildeten Lokalisierungsfunktionen vorgesehen sind, wobei das dieser größten Lokalisierungsfunktion zugeordnete Paar (k,l) von Sensorsignalen als fehlerhaft erkannt wird.

9.   Vorrichtung nach Anspruch 7 oder 8, **dadurch gekennzeichnet, daß**

(a) zur Prüfung der Sensoren
  -   Mittel zur Funktionsüberwachung der Sensoren vorgesehen sind sowie
  -   Mittel zur Plausibilitätsprüfung der Sensorsignale zur Prüfung, ob die jeweils erhaltenen Meßwerte sich in Übereinstimmung mit den dynamischen Eigenschaften des Systems befinden,
  -   Mittel zur Durchführung einer Mehrheitsbetrachtung, bei welcher die aus den Signalen verschiedener Sensoren erhaltenen Zustandsgrößen miteinander verglichen werden, wobei Sensoren, deren Meßgrößen zu Zustandsgrößen führen, welche von den aus der Mehrheit der anderen Sensoren gewonnenen Zustandsgrößen deutlich abweichen, als fehlerhaft angesehen werden,
  -   die Mittel zur Überwachung der Sensorsignale anhand des Paritätsvektors und des Vergleichs mit Schwellwerten,

(b) Entscheidungsmittel zur Verarbeitung der Ergebnisse der Prüfschritte nach einer Entscheidungsfunktion zur Entscheidung über gültige oder ungültige Sensorsignale und

(c) Rekonfigurationsmittel, durch welche aus den als gültig betrachteten Sensorsignalen nach einer fehlertoleranten, optimalen Schätzung Schätzwerte für die Zustandsgrößen erzeugbar und auf eine Steuervorrichtung aufschaltbar sind.

**Claims**

1. Method of detecting and identifying failures of sensors for state variables which are related with measuring quantities provided directly by the sensors through a measurement equation

$$\underline{m} = H\underline{x} + \underline{\varepsilon}$$

$\underline{m}$ being a vector of the measuring quantities, $\underline{x}$ being a vector 0f the state variables and **H** being the measurement matrix, the order of $\underline{m}$ being larger than the order of $\underline{x}$,
with the steps of
   (a) determining validation vectors $\underline{v}_i$ as column vectors of a matrix

$$P = [\underline{v}_1\ \underline{v}_2...\underline{v}_n]$$

   (b) determining a parity vector $\underline{v}$ as an element of a parity space, which is the orthogonal complement of the signal space, as a linear combination of the validation vectors with the associated elements $m_i$ of the measurement vector $\underline{m}$:

$$\underline{v} = \sum_{i=1}^{n} m_i\ \underline{v}_i = \begin{bmatrix} P_1\ P_2\ ...\ P_n \end{bmatrix}^T$$

   (c) forming a detection function

$$DF = <\underline{v};\ \underline{v}>$$

   as a scalar product of the parity vector with itself, and examining, whether this detection function is larger or smaller than a predetermined threshold value, exceeding of this threshold value signalling a failure,
characterized in that
   (d) if a failure is present each component ($p_i$) of the parity vector is multiplied by the elements ($p_{ik}$) of the associated row (i) of the matrix (P) composed of the validation vectors ($\underline{v}_k$)
   the products thus formed are added up for a respective column (k) of this matrix (P) to form a column product sum ( ([$LF_k$; $\Delta_k$) each column product sum ($LF_k$; $\Delta_k$) being associated with one of the sensor signals,
   localisation functions ($LF_k$; $LF_{k1}$) being formed from the column product sums ($LF_k$; $\Delta_k$),
   the largest one of the localisation functions being sought, the sensor signals associated with this largest localisation function being recognized as defective, and
   (e) reconfiguration of the sensor signals taking into account the failure status thus determined is effected.

2. Method as claimed in claim 1, characterized in that the products thus formed are added for a respective column (k) of this matrix (P) to form a localisation function, each localisation function ($Lf_k$) being associated with one of the sensor signals.

3. Method as claimed in claim 1, **characterized in that**
   (a) localization functions

$$LF(k,l) = \left| \Delta_k\ \underline{v}_k + \Delta_l\ \underline{v}_l \right|^2$$

   with $1 \leqq l \leqq n$ and $1 \leqq k \leqq n$ are formed from the column product sums, the k and 1, respectively, being assigned to pairs of associated sensor signals, with which the simultaneous occurence of failures is probable,
   (b) the largest one of the localisation function thus formed indicates a failure of the pair of sensor signals assigned to this largest localisation function.

4. A method as claimed in claim 2 or 3, **characterized in that**
   (a) the sensors consecutively are subjected to the following test steps:

- self-monitoring
- a plausibility check, whereby it is checked whether the respective obtained measuring values are in conformity with the dynamic characteristics of the system,
- a voting monitoring whereby the state variables obtained from the signals of different sensors are compared, sensors the measuring values of which result in state variables which clearly deviate from the state variables obtained from the majority of the other sensors being regarded as defective,
- the monitoring on the basis of the parity vector and the comparison with threshold values,

(b) the results of the test steps are processed in accordance with a decision function to decide about valid or invalid sensor signals, and

(c) estimated values of the state variables are formed from the sensor signals regarded as valid in accordance with a failure-tolerant optimal estimation and are output to a control device.

5. A method as claimed in claim 4, **charcterized in that**

(a) the following condition serves as criterion for the voting monitoring of two-axis gyros:

$$1 / \left( \underline{h_i} \times \underline{h_j} \right)^* \ \ \left\langle \left( m_{ix} \, \underline{g_{ix}} - m_{jx} \, \underline{g_{jx}} \right) + \left( m_{iy} \underline{g_{iy}} - m_{jy} \underline{g_{jy}} \right); \ \ \left( \underline{h_i} \times \underline{h_j} \right) \right\rangle \ < E_{ij}$$

wherein

$m_{ix}, m_{iy}$        are the measuring signals of the i-th gyro about the x- and y-axis, respectively, thereof,

$\underline{g_{ix}}, \underline{g_{iy}}$        are the unity vectors in the directions of the x-input axis and the y-input axis, respectively, of the i-th gyro.

$\underline{h_i}$        is the unity vector in the direction of the spin axis of the i-th gyro,

$\underline{E}_{ij}$        are predetermined threshold values,

$<\underline{a} \ \underline{b}>$        is the scalar product of the vectors $\underline{a}$ and $\underline{b}$, and

$(\underline{a} x \underline{b})$        is the vector product of the vectors $\underline{a}$ and $\underline{b}$,

(b) this criterion is applied to all possible combinations of pairs of gyros,

(c) a status information is derived therefrom which indicates, for which pairs of gyros said threshold values are exceeded, and

(d) a defective gyro is determined from this status information.

6. Device for detecting and identifying failures of sensors for state variables which are associated with the measuring quantities provided directly by the sensors through a measurement equation

$$\underline{m} = H\underline{x} + \underline{\varepsilon}$$

$\underline{m}$ being a vector of the measuring quantities, $\underline{x}$ being a vector of the state variables and $H$ being the measurement matrix, the order of $\underline{m}$ being larger than the order of $\underline{x}$,

**characterized by**

(a) means for determining validation vectors $v_i$ as column vectors of a matrix

$$P = [\underline{v}_1 \ \underline{v}_2 ... \underline{v}_n]$$

(b) means for determining a parity vector $\underline{v}$ as an element of a parity space, which is the orthogonal complement of the signal space, as a linear combination of the validation vectors with the associated elements $m_i$ of the measurement vector $\underline{m}$:

$$\underline{v} = \sum_{i=1}^{n} m_i \ \underline{v}_i = \left[ P_1 \ P_2 \ ... \ P_n \right]^T$$

(c) means for forming a detection function

$$DF = <\underline{v}; \underline{v}>$$

as a scalar product of the parity vector with itself, and examining, whether this detection function is larger or smaller than a predetermined threshold value, exceeding this threshold value, exceeding this threshold value signalling a failure,

**characterized by**

(d) means for multiplying each component ($p_i$) of the parity vector by the elements ($P_{ik}$) of the associated row (i) of the matrix (P) composed of the validation vectors ($v_k$),

(e) means for adding up the products thus formed for a respective column (k) of this matrix (P) to form a column product sum (LF$_k$; $\Delta_k$), each column product sum (LF$_k$) being associated with one of the sensor signals,

(f) means for seeking the largest one of the localisation functions thus formed, the sensor signal associated with this largest localisation function being recognized as defective, and

(g) means for reconfiguring the sensor signals taking into account the failure status thus determined.

7. Device as claimed in claim 6, **characterized in that** the means for adding up the products thus formed for a respective column (k) of this matrix (P) serve to form a localisation function (Lf$_k$), each localisation function (Lf$_k$) being associated with one of the sensor signals.

8. A device as claimed in claim 6, **characterized in that**
(a) the means are adapted to form localization functions

$$LF(k,l) = \left| \Delta_k\, \underline{v_k} + \Delta_l\, \underline{v_l} \right|^2$$

with $1 \leqq l \leqq n$ und $1 \leqq k \leqq n$, the k and l respectively, being assigned to pairs of associated sensor signals, with which the simultaneous occurence of failures is probable,

(b) means for seeking the largest of the localisation functions thus formed are provided, the pair (k, l) of sensor signals associated with this largest localisation function being recognized as defective.

9. A device as claimed in claim 7 or 8, **characterized in that**
(a) for the testing of the sensors
   - means for self-monitoring of the sensors are provided, and
   - means for the carrying out of a plausibility check, checking whether the respective obtained measuring values are in conformity with the dynamic characteristics of the system,
   - means for the carrying out of a voting monitoring whereby the state variables obtained from the signals of different sensors are compared, sensors the measuring values of which result in state variables obtained from the majority of the other sensors being regarded as defective, and

(b) decision means for processing the results of the test steps are in accordance with a decision function to decide on valid or invalid sensor signals, and

(c) reconfiguration means for forming estimated values of the state variables from the sensor signals regarded as valid in accordance with a failure-tolerant optimal estimation and for outputting said estimated values to a control device.

## Revendications

1. Procédé destiné à reconnaître et identifier des erreurs dans des capteurs pour des variables d'état qui sont liées à des variables mesurées, directement livrées par les capteurs, par une équation de mesure,

$$\underline{m} = H\underline{x} + \underline{\varepsilon}$$

$\underline{m}$ étant un vecteur des variables mesurées, $\underline{x}$ un vecteur des variables d'état et H la matrice de mesure et l'ordre de $\underline{m}$ étant plus grand que l'ordre de $\underline{x}$,

avec les opérations de procédé
(a) détermination de vecteurs de validation $v_k$ en tant que vecteurs de colonne d'une matrice

$$P = [\underline{v_1}\, \underline{v_2} \dots \underline{v_n}]$$

(b) détermination d'un vecteur de parité $\underline{v}$ en tant qu'élément d'un espace de parité qui est le complément orthogonal de l'espace de signal en tant que combinaison linéaire des vecteurs de validation avec les éléments associés $m_l$ du vecteur de mesure $\underline{m}$:

$$\underline{v} = \sum_{i=1}^{n} m_i\, \underline{v_i} = \left[ P_1\ P_2 \dots P_n \right]^T$$

(c) formation d'une fonction de détection

$$DF = \langle \underline{v}; \underline{v} \rangle$$

en tant que produit scalaire du vecteur de parité avec lui-même et vérification pour savoir si cette fonction de détection est plus grande ou plus petite qu'une valeur limite prédéterminée, le dépassement de cette valeur limite signalisant l'existance d'une erreur,

**caractérisé par le fait que**

(d) quand une erreur existe

- chaque composante ($p_i$) du vecteur de parité est multipliée avec les éléments ($p_{ik}$) de la ligne associée (i) de la matrice (P) formée par les vecteurs de validation ($\underline{v}_k$),
- les produits ainsi formés pour chaque fois une colonne (k) de cette matrice (P) sont totalisés afin de former une somme de produit de colonne ($LF_k;\Delta_k$), chaque somme de produit de colonne ($LF_k;\Delta_k$) étant associée à l'un des signaux de capteur,
- des fonctions de localisation ($LF_k;LF_{k1}$) sont formées à partir des sommes de produit de colonne ($LF_k;\Delta_k$),
- la plus grande des fonctions de localisation ainsi formées est recherchée, les signaux de capteur associés à cette fonction de localisation la plus grande étant reconnus comme deffectueux, et

(e) une reconfiguration des signaux de capteur est faite en tenant compte de l'état d'erreur ainsi détecté.

2. Procédé selon la revendication 1, **caractérisé par le fait que** les produits ainsi formés pour chaque fois une colonne (k) de cette matrice (P) sont totalisés afin de former une fonction de localisation, l'un des signaux de capteur étant associé à chaque fonction de localisation ($LF_k$).

3. Procédé selon la revendication 1, **caractérisé par le fait que**
   (a) des fonctions de localisation

$$LF(k,l) = \left| \Delta_k \, \underline{v_k} + \Delta_l \, \underline{v_l} \right|^2$$

sont formées à partir des sommes de produit de colonne avec $1 \leqq l \leqq n$ et $1 \leqq k \leqq n$, k et l étant associés chaque fois à des paires de signaux de capteur allant ensemble pour lesquels l'apparition simultanée d'erreurs est vraisemblable, et
   (b) la plus grande des fonctions de localisation ainsi formées est recherchée, la paire (k,l) associée à cette fonction de localisation la plus grande étant reconnue par le signal de capteur comme deffectueuse.

4. Procédé selon la revendication 2 ou 3, **caractérisé par le fait que**
   (a) les capteurs sont soumis successivement aux opérations de vérification suivantes:
   - à une surveillance de fonction,
   - à une vérification de vraisemblance dans laquelle est vérifié si les valeurs mesurées chaque fois obtenues se trouvent conformes aux propriétés dynamiques du système,
   - à une considération de majorité pour laquelle les variables d'état obtenues à partir des signaux de différents capteurs sont comparées les unes aux autres, des capteurs dont les variables mesurées mènent à des variables d'état, lesquelles divergent distinctement des variables d'état tirées de la majorité des autres capteurs, étant considérés comme deffectueux,
   - à une surveillance à l'aide du vecteur de parité et de la comparaison à des valeurs de seuil,
   (b) les résultats des opérations de vérification sont traités selon une fonction de décision par rapport à une décision à propos de signaux de capteur valables ou non valables et
   (c) des valeurs estimatives pour les variables d'état sont formées à partir des signaux de capteur considérés comme valables selon une estimation optimale et tolérant des erreurs et sont émises à un dispositif de contrôle.

5. Procédé selon la revendication 4, **caractérisé par le fait que**
   (a) la condition ci-après sert de critère pour une considération de majorité pour des gyroscopes biaxiaux disposés de façon quelconque:

$$1 / \left( \underline{h_i} \times \underline{h_j} \right)^* \quad \left\langle \left( m_{ix} \, \underline{g_{ix}} - m_{jx} \, \underline{g_{jx}} \right) + \left( m_{iy} \, \underline{g_{iy}} - m_{jy} \, \underline{g_{jy}} \right); \quad \left( \underline{h_i} \times \underline{h_j} \right) \right\rangle \quad < E_{ij}$$

$m_{ix}$, $m_{iy}$ étant les signaux de mesure du $i^{ème}$ gyroscope autour de son axe d'entrée x et y respectivement,

$g_{ix}$, $g_{iy}$ étant les vecteurs d'unité en direction de l'axe d'entrée x et de l'axe d'entrée y respectivement du $i^{ème}$ gyroscope,

$\underline{h}_i$ étant le vecteur d'unité en direction de l'axe de spin du $i^{ème}$ gyroscope,

$\overline{E}_{ij}$ étant des valeurs de seuil prédéterminées,

<a;b> étant le produit scalaire de vecteurs $\underline{a}$ et $\underline{b}$ et

$(\underline{a}x\underline{b})$ étant le produit de vecteur des vecteurs $\underline{a}$ et $\underline{b}$,

(b) ce critère est appliqué à toutes les combinaisons possibles de paires de gyroscopes,

(c) à partir de là une information de status est tirée qui indique pour quelles paires de gyroscopes les valeurs de seuil sont dépassées et

(d) à partir de cette information de status un gyroscope deffectueux est déterminé.

6. Dispositif destiné à reconnaître et identifier des erreurs dans des capteurs pour des variables d'état qui sont liées à des variables mesurées, directement livrées par les capteurs, par une équation de mesure,

$$\underline{m} = H\underline{x} + \varepsilon$$

$\underline{m}$ étant un vecteur des variables mesurées, $\underline{x}$ un vecteur des variables d'état et H la matrice de mesure et l'ordre de $\underline{m}$ étant plus grand que l'ordre de $\underline{x}$, comprenant

(a) des moyens destinés à déterminer des vecteurs de validation $\underline{v}_i$ en tant que vecteurs de colonne d'une matrice

$$P = [\underline{v}_1 \ \underline{v}_2 \dots \underline{v}_n]$$

(b) des moyens destinés à déterminer un vecteur de parité $\underline{v}$ en tant qu'élément d'un espace de parité qui est le complément orthogonal de l'espace de signal en tant que combinaison linéaire des vecteurs de validation avec les éléments associés $m_i$ du vecteur de mesure $\underline{m}$:

$$\underline{v} = \sum_{i=1}^{n} m_i \ \underline{v}_i = \left[ P_1 \ P_2 \ \dots \ P_n \right]^T$$

(c) des moyens destinés à former une fonction de détection

$$DF = <\underline{v}; \underline{v}>$$

en tant que produit scalaire du vecteur de parité avec lui-même et vérification pour savoir si cette fonction de détection est plus grande ou plus petite qu'une valeur limite prédéterminée, le dépassement de cette valeur limite signalisant l'existance d'une erreur,

**caractérisé par**

(d) des moyens destinés à multiplier chaque composante ($p_i$) du vecteur de parité avec les éléments ($p_{ik}$) de la ligne associée (i) de la matrice (P) formée par les vecteurs de validation($v_k$),

(e) des moyens destinés à totaliser les produits ainsi formés pour chaque fois une colonne (k) de cette matrice (P) afin de former une somme de produit de colonne ($LF_k;\Delta_k$), chaque somme de produit de colonne ($Lf_k;\Delta_k$) étant associé à l'un des signaux de capteur,

(f) des moyens destinés à rechercher la plus grande des fonctions de localisation ainsi formées, les signaux de capteur associés à cette fonction de localisation la plus grande étant reconnus comme deffectueux, et

(g) des moyens destinés à la reconfiguration des signaux de capteur en tenant compte de l'état d'erreur ainsi détecté.

7. Dispositif selon la revendication 6, **caractérisé par le** fait que les moyens sont destinés à totaliser les produits ainsi formés pour chaque fois une colonne (k) de cette matrice (P) afin de former une fonction de localisation ($LF_k$), un de signaux de capteur étant associé à chaque fonction de localisation ($LF_k$).

8. Dispositif selon la revendication 6, **caractérisé par le fait que**

(a) les moyens sont destinés à former des fonctions de localisation

$$LF(k,l) = \left| \Delta_k \ \underline{v}_k + \Delta_l \ \underline{v}_l \right|^2$$

avec $1 \leqq l \leqq n$ et $1 \leqq k \leqq n$, k et l étant associés chaque fois à des paires de signaux de capteur allant ensemble pour lesquels l'apparition simultanée d'erreurs est vraisemblable,

(b) des moyens destinés à rechercher la plus grande des fonctions de localisation ainsi formées sont prévus, la paire (k,l) associée à cette fonction de localisation la plus grande étant reconnue par le signal de capteur comme deffectueuse.

9. Dispositif selon la revendication 7 ou 8, **caractérisé par le fait que**

(a) afin de vérifier les capteurs

- des moyens destinés à la surveillance de fonction des capteurs sont prévus ainsi que
- des moyens destinés à la vérification de vraisemblance des signaux de capteur afin de vérifier si les valeurs mesurées chaque fois obtenues se trouvent conformes aux propriétés dynamiques du sytème,
- des moyens destinés à exécuter une considération de majorité pour laquelle les variables d'état obtenues à partir des signaux de différents capteurs sont comparées les unes aux autres, des capteurs dont les variables mesurées mènent à des variables d'état, lesquelles divergent distinctement des variables d'état tirées de la majorité des autres capteurs, étant considérés comme deffectueux,
- les moyens destinés à surveiller les signaux de capteur à l'aide du vecteur de parité et de la comparaison à des valeurs de seuil,

(b) des moyens de décision destinés à traiter les résultats des opérations de vérification selon une fonction de décision destinée à décider à propos de signaux de capteur valables ou non valables et

(c) des moyens de reconfiguration par lesquels des valeurs estimatives pour les variables d'état sont susceptibles d'être produites à partir des signaux de capteur considérés comme valables selon une estimation optimale et tolérant des erreurs, et sont susceptibles d'être appliquées à un dispositif de commande.

Fig.1

Fig.2

BIT SIGNALS — 46

SELF-MONITORING — 44, 36

PLAUSIBILITY-CHECKS — 50

VOTING/MONITORING — 52

PARITY-VECTOR — 54

COMPARISIONN AGAINST THRESHOLDS

REDUNDANT SENSOR - MODULES

DECISION FUNCTION — 38

-INVALID SENSOR DECISION

-VALID SENSORS SELECTION

80, 82, 84, 86, 108

FAULT-TOLERANT OPTIMAL ESTIMATOR

$x_1 = \begin{bmatrix} \hat{q} \\ \hat{p} \\ \hat{r} \end{bmatrix}$ — 110

$x_2 = \begin{bmatrix} \hat{a}_v \\ \hat{a}_1 \\ \hat{a} \end{bmatrix}$ — 120

18, 20, 22, 48, 24, 26, 28, 30, 32

EP 0 416 370 B1

EP 0 416 370 B1

$\Downarrow$ $\underline{\mathbf{n}}$

$\underline{\mathbf{g}}_i$ $\Rightarrow$

$$\frac{1}{|\underline{h}_i \times \underline{h}_j|} \langle [(m_{ix}\, \underline{g}_{jx} - m_{jx}\, \underline{g}_{jx}) + (m_{iy}\, \underline{g}_{iy} - m_{jy}\, \underline{g}_{jy})]\,;\, (\underline{h}_i \times \underline{h}_j) \rangle \quad < E_{ij}$$

$\underline{h}_i$ $\Rightarrow$

FOR THE COMBINATIONS

SENSOR-MODULES  1 AND 2 ,  i=1,  j=2
SENSOR-MODULES  1 AND 3 ,  i=1,  j=3
SENSOR-MODULES  1 AND 4 ,  i=1,  j=4
SENSOR-MODULES  2 AND 3 ,  i=2,  j=3
SENSOR-MODULES  2 AND 4 ,  i=2,  j=4
SENSOR-MODULES  3 AND 4 ,  i=3,  j=4

$\Downarrow$ $E_{ij}$-STATUS

52

Fig.3

INPUT MEASUREMENT

LOCALISATION FUNCTIONS

$m_1$  $m_2$ --- $m_n$

$LF_1$  $LF_2$ --- $LF_n$

74

56

58

60

70

$p_1$

$p_{11}$  $p_{12}$  $p_{1n}$

$p_1$  $p_{11}$  $p_{12}$  $p_{1n}$

$p_2$

$p_{21}$  $p_{22}$  $p_{2n}$

$p_2$  $p_{21}$  $p_{22}$  $p_{2n}$

76

$p_n$

$p_{n1}$  $p_{n2}$  $p_{nn}$

$p_n$  $p_{n1}$  $p_{n2}$  $p_{nn}$

62

72

54

DF  64

66

68

FAILURE DETECTED

Fig.4

EP 0 416 370 B1

20

Fig.5

STATUS FROM
HMS - STAGES

32

DECISION FUNCTION

ANTECEDENT - CONSEQUENCE RULES    90

INFERENCE NET    92

CERTAINTY COMPUTATIONS    94

INVALIDE SENSOR DECISION    96

VALID SENSOR SELECTION    98

SENSOR - VALIDITY
STATUS

108

Fig.6

VENN - DIAGRAMM

COMBINED DETECTION AREA

Fig.7

LOGIC DIAGRAM

STATUS, "P"                86
84
STATUS, "V"
STATUS, "B"
82                    102        106

SYSTEM-
FAILURE
DETECTION
STATUS

Fig.8

EP 0 416 370 B1

```
                    SENSOR - VALIDITY
108 ⤹            ⇩      STATUS

┌─────────────────────────────────────┐
│   i - TH MEASUREMENT AXIS DEFECT     │
│                OR                    │~112
│       (i,j) - GYRO DEFECT            │
└─────────────────────────────────────┘

┌─────────────────────────────────────┐
│   EXCLUDE mᵢ  OR mᵢ AND mⱼ           │
│                                      │~114
│        FROM m                        │
└─────────────────────────────────────┘

┌─────────────────────────────────────┐
│   RECONFIGURE "M" ACCORDINGLY        │~116
└─────────────────────────────────────┘

┌─────────────────────────────────────┐
│   COMPUTE OUTPUT DATA                │
│                                      │~118
│        ω = M * m                     │
└─────────────────────────────────────┘

                    ω - OUTPUT FOR
120 ⤹            ⇩     FLIGHT CONTROL
```

Block 112: $i$ - TH MEASUREMENT AXIS DEFECT OR $(i,j)$ - GYRO DEFECT

Block 114: EXCLUDE $m_i$ OR $m_i$ AND $m_j$ FROM $\underline{m}$

Block 116: RECONFIGURE "M" ACCORDINGLY

Block 118: COMPUTE OUTPUT DATA $\underline{\omega} = M * \underline{m}$

SENSOR - VALIDITY STATUS (108)

$\underline{\omega}$ - OUTPUT FOR FLIGHT CONTROL (120)

Fig.9